Europäisches Patentamt

European Patent Office

Office européen des brevets

(19)

(11) **EP 1 019 710 B1**

(12) **EUROPÄISCHE PATENTSCHRIFT**

(45) Veröffentlichungstag und Bekanntmachung des Hinweises auf die Patenterteilung:
**23.06.2004  Patentblatt 2004/26**

(21) Anmeldenummer: **98959706.7**

(22) Anmeldetag: **05.10.1998**

(51) Int Cl.$^7$: **G01N 27/00**

(86) Internationale Anmeldenummer:
**PCT/DE1998/002937**

(87) Internationale Veröffentlichungsnummer:
**WO 1999/019718 (22.04.1999 Gazette 1999/16)**

(54) **SAUERSTOFFSENSOR**

OXYGEN SENSOR

CAPTEUR D'OXYGENE

(84) Benannte Vertragsstaaten:
**DE ES FR GB IT SE**

(30) Priorität: **08.10.1997  DE 19744316**

(43) Veröffentlichungstag der Anmeldung:
**19.07.2000  Patentblatt 2000/29**

(73) Patentinhaber:
• **Conti Temic Microelectronic GmbH**
  **90411 Nürnberg (DE)**
• **UNIVERSITÄT KARLSRUHE**
  **76128 Karlsruhe (DE)**

(72) Erfinder:
• **MOOS, Ralf**
  **D-88048 Friedrichshafen (DE)**
• **MENESKLOU, Wolfgang**
  **D-76761 Rühlzheim (DE)**
• **SCHREINER, Hans-Jürgen**
  **D-67365 Schwegenheim (DE)**
• **HÄRDTL, Karl-Heinz**
  **D-76767 Hagenbach (DE)**

(56) Entgegenhaltungen:
**EP-A- 0 055 104         DE-A- 3 723 051**
**US-A- 4 454 494**

• **CHEMICAL ABSTRACTS, vol. 114, no. 20, 20. Mai 1991 Columbus, Ohio, US; abstract no. 191612, TACHIBANA, KOICHI ET AL: "Sensor for determining oxygen in exhaust gases" XP002101348 & JP 02 269948 A (MATSUSHITA ELECTRIC INDUSTRIAL CO., LTD., JAPAN)**
• **GÖPEL W. ET AL: "Sensors, A Comprehensive Survey, Volume 2, Chemical and Biochemical Sensors, Part I" 1991 , VCH-VERLAG , D-6940 WEINHEIM DE XP002101347 siehe Seite 458, Absatz 9.5.4 - Seite 459**
• **ZHOU X ET AL: "Defect structure and oxygen sensing properties of Mg-doped SrTiO3 thick film sensors" SENSORS AND ACTUATORS B, Bd. 41, Nr. 1-3, 30. Juni 1997, Seite 177-182 XP004089137**

**Beschreibung**

Die Erfindung betrifft ein temperaturunabhängiges sauerstoffsensitives Widerstandsmaterial auf Titanatbasis.

Immer schärfere Abgasgrenzwerte verbunden mit dem Druck zur Reduzierung des Kraftstoffverbrauches zwingen die Automobilhersteller zu neuen Konzepten für Verbrennungskraftmaschinen. Es zeigt sich, daß die beiden o.g. Forderungen am besten bei einem Betrieb mit Luftüberschuß (Luftzahl $\lambda$>1) miteinander in Einklang gebracht werden können. Derartige moderne "Magerkonzepte" erfordern eine präzise Kenntnis des Sauerstoffgehaltes des Abgases. Das Prinzip der herkömmlichen potentiometrischen $\lambda$-Sonde kann nur mit großem Aufwand für hohe Sauerstoffkonzentrationen, wie sie in solch magerem Abgas vorkommen, ausgelegt werden.

Um auch im mageren Bereich den Sauerstoffgehalt des Abgases messen zu können, wurde zum Beispiel in der EP 0 191 627, in der DE 38 41 611 sowie von [1] vorgeschlagen, amperometrische Sonden nach dem Grenzstromprinzip ("Grenzstromsonde") aus einem sauerstoffionenleitenden Werkstoff aufzubauen.

Ein solcher Grenzstromsensorsensor ist bspw. auch dem Chemical Abstract 191612 zur JP 02269948 zu entnehmen, bei der ein fester Elektrolytkörper mit zwei gegenüber angeordneten Elektroden vorgestellt wird, wobei eine der Elektroden aus einem Oxid vom Perovskite-Typ der allgemeinen Formel $L_{(1-x)}A_{(x)}Co_{(1-y)}M_{(y)}O_{(3-delta)}$ ist, wobei A Sr, Ba, Ca und L La, Ce, Pr, Nd sein kann, wie auch im gattungsbildenden Oberbegriff des Anspruchs 1, jedoch kein gattungsgemäßer $(Ti_{1-z}Fe_z)$-Komplex entstehen kann, da für M nur Fe , nicht jedoch Ti und erst recht keine Mischung beider zu entnehmen ist, die jedoch gemäß dem nachfolgend beschriebenen Stand der Technik grundlegend für das Erreichen einer Temperaturunabhängigkeit vom Arbeitspunkt des Sauerstoffpartialdrucks ist.

Zudem ist die Wirkungsweise dieses Sensors völlig abweichend von resistiven Sensoren und basiert auf einer Ionendiffussionsfähigkeit einer elektrisch isolierenden, jedoch porösen und für Sauerstoffionen diffusionsfähigen Schicht, die durch eine weitere, die Gasdiffusion kontrollierende Schicht so begrenzt wird, daß bei entsprechender Pumpspannung eine Verarmung an Sauerstoff-Ionen auftritt und nun der zu messende Stromfluß abhängig vom Sauerstoffpartialdruck wird. Eine möglicherweise auftretende Veränderung des ohmschen Widerstands eines Materials einer der Elektroden wird somit nicht betrachtet oder ausgenutzt, wirkt eher störend.

Es besteht aber nach der DE 2334044 sowie gemäß [2] auch die Möglichkeit, die Sauerstoffpartialdruckabhängigkeit der elektrischen Leitfähigkeit eines metalloxidischen Werkstoffes als Sensoreffekt auszunutzen, und daraus einen Sensor herzustellen, aus dessen elektrischem Widerstand R auf den Sauerstoffpartialdruck $pO_2$ des Abgases und daraus auf den Sauerstoffgehalt im Abgas geschlossen werden kann.

Besonders gründlich wurden dotiertes Titanoxid ($TiO_2$) und Strontiumtitanat ($SrTiO_3$) untersucht (DE 37 23 051, EP 0365567, [2]), da solche Titanoxide aufgrund ihrer chemischen Stabilität den rauhen Betriebsbedingungen im Abgasstrang eines Verbrennungsmotors standhalten können.

Jedoch besitzen Sensoren aufgebaut aus diesen Verbindungen - wie auch aus den meisten anderen Metalloxiden - eine sehr starke Temperaturabhängigkeit des elektrischen Widerstandes, die eine aufwendige Heizungsregelung verbunden mit umfangreichen konstruktiven Maßnahmen, welche die Einflüsse plötzlicher Temperaturänderungen abmildern, erfordert.

Daher wurde in DE 42 02 146, DE 42 44 723, DE 43 25 183 und EP 0 553 452 erwogen, auf dotierte oder undotierte Kuprate wie z.B. $La_2CuO_{4+y}$ überzugehen, da deren elektrische Leitfähigkeit gerade im Bereich hoher Sauerstoffgehalte, d.h. bei $\lambda$>1, von der Temperatur unabhängig ist.

Für Anwendungen im Abgasstrang sind Kuprate aber nicht geeignet, da sie chemisch nicht allzu stabil sind und sich bei hohen Temperaturen und/oder bei niedrigen Sauerstoffpartialdrücken, wie z.B. bei kurzzeitigem Betrieb mit "fettem" Gemisch ($\lambda$<1) zersetzen.

Chemisch wesentlich stabiler als Kuprate sind aus der DE 44 18 054 bekannte erdalkali-dotierte Lanthanferrite. Ihre elektrische Leitfähigkeit weist im Vergleich zu $SrTiO_3$ auch eine geringere Temperaturabhängigkeit im mageren Abgasbereich ($\lambda$>1) auf. Allerdings besitzen Sensoren, welche aus diesen Materialien hergestellt wurden, eine größere Temperaturabhängigkeit des elektrischen Widerstandes als Sensoren auf Kupratbasis.

Williams et al. schlugen in der EP 0 062 994 vor, im $SrTiO_3$ das Titan (Ti) teilweise durch Eisen (Fe) zu ersetzen und fanden heraus, daß Sensoren hergestellt aus der Verbindung $SrTi_{0.7}Fe_{0.3}O_{3-\delta}$ in mageren Atmosphären oberhalb 500°C..600°C nahezu keine Temperaturabhängigkeit des elektrischen Widerstandes, aber eine Sauerstoffpartialdruckabhängigkeit gemäß $R\sim pO_2^{-1/5}$ besitzen. Eigene Messungen bestätigten dies, zeigten aber, daß die Temperaturunabhängigkeit des elektrischen Widerstandes nur bei einem Sauerstoffpartialdruck um $10^{-2}$ bar ($\lambda\approx$1.055) gegeben ist.

Die der vorliegenden Erfindung zugrunde liegende Aufgabe besteht darin, sauerstoffsensitive Widerstandsmaterialien anzugeben, bei denen sich die verschwindende Temperaturabhängigkeit des elektrischen Widerstands des Sensors durch geeignete Dotierstoffzugaben bezüglich des Sauerstoffpartialdrucks einstellen läßt.

Diese Aufgabe wird durch die sauerstoffsensitive Widerstandsmaterialien auf der Basis komplexer Metalloxide gemäß Anspruch 1 gelöst.

Die erfindungsgemäße Materialzusammensetzung besitzt den Vorteil, daß der Bereich der vollständigen Temperaturunabhängigkeit, d.h. TKR=0, wobei TKR den Temperaturkoeffizienten des elektrischen Widerstandes des Sensors bei konstantem Sauerstoffpartialdruck angibt

$$TKR = \frac{1}{R} \times \frac{\Delta R}{\Delta T} | pO_2 = const.$$

gezielt durch geeignete Dotierstoffzugaben zu hohen und niedrigen Sauerstoffpartialdrücken verschoben werden kann. Aufgrund dieser Materialzusammensetzung kann der Sensor so gestaltet werden, daß das Sensorsignal des daraus hergestellten Sensors für bestimmte Motorkonzepte, die durch einen bestimmten Sauerstoffgehalt des Abgases gekennzeichnet sind, temperaturunabhängig ist. Eine aufwendige Heizungsregelung kann für solch einen Sensor entfallen, was zu einem großen Kostenvorteil gegenüber den bekannten Prinzipien führt. Zusätzlich kann der Sensor durch weitere erfindungsgemäße Dotierstoffzugaben so gestaltet werden, daß der

Temperaturkoeffizient seines elektrischen Widerstandes auch bei größeren Abweichungen von oben genannten Arbeitspunkt noch vernachlässigbar ist.

Im folgenden wird die Erfindung anhand von Abbildungen und Ausführungsbeispielen näher erläutert.

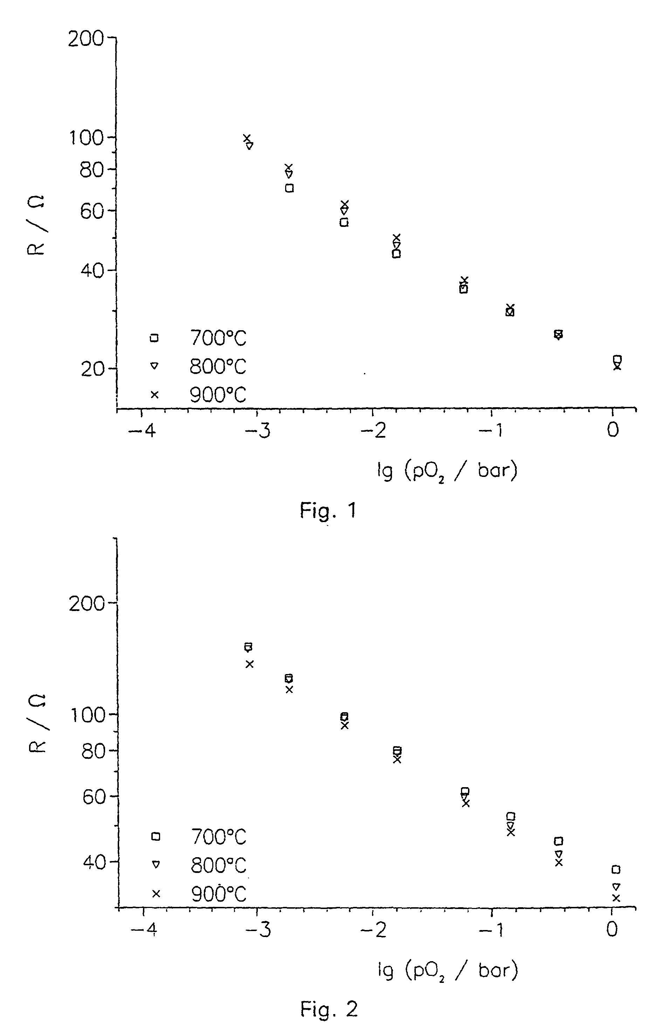

**Fig.1** zeigt den Widerstand R eines Sensors, aufgebaut aus einem Werkstoff der Materialklasse 1a ($Sr_{1-a}M_aTi_{1-z}Fe_z O_{3-\delta}$), hier als Beispiel mit z=0,3, M=Lanthan (La) und a=0,05) doppeltlogarithmisch gegen den Sauerstoffpartialdruck $pO_2$ des Abgases aufgetragen. Parameter ist die Temperatur T des Sensors.

**Fig.2** zeigt den Widerstand R eines Sensors, aufgebaut aus einem Werkstoff der Materialklasse 2a ($Sr(Ti_{1-z}Fe_z)_{1-c} M''_cO_{3-\delta}$), hier als Beispiel mit z=0,3, M''=Gallium (Ga) und c=0,05) doppelt-logarithmisch gegen den Sauerstoffpartialdruck $pO_2$ des Abgases aufgetragen. Parameter ist die Temperatur T des Sensors.

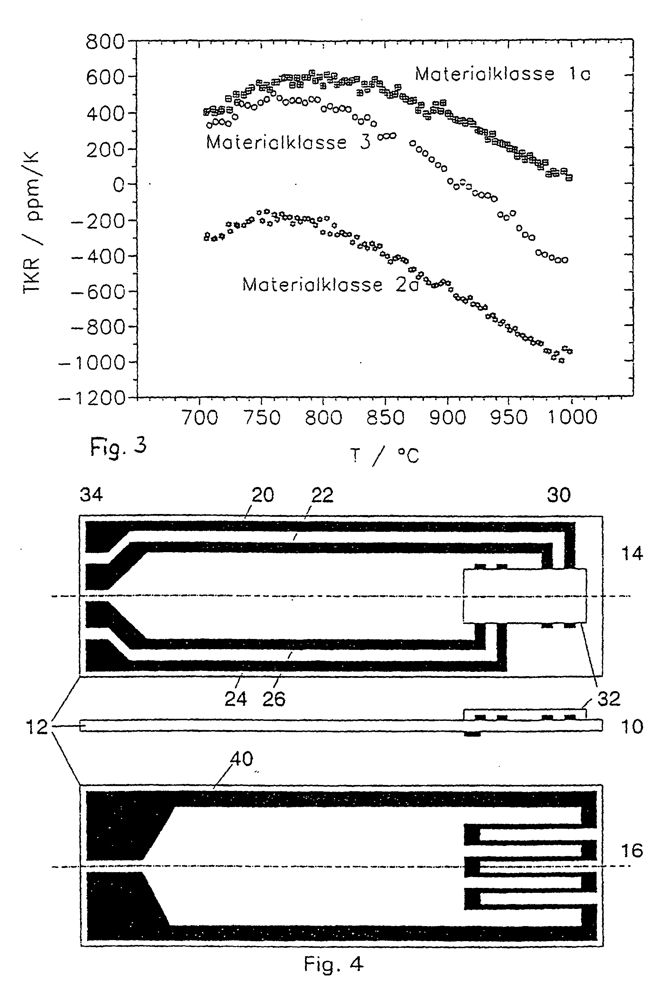

Fig.3 zeigt den Vergleich der Temperaturkoeffizienten des Widerstandes TKR dreier Sensoren, aufgebaut aus Werkstoffen der Materialklassen 1a, 2a und 3, wobei die Materialklasse 3 eine Mischung aus den Materialklassen 1 und 2 darstellt. Beispielhaft wurde hier ein Mischungsverhältnis von 1:1 der Materialklassen 1a und 2a gewählt, mit z=0,3, M=Lanthan (La), a=0,05, M''=Gallium (Ga) und c=0,05.

**Fig.4** zeigt eine Ausführungsform in Dickschichttechnik.

Durch eine erfindungsgemäße Materialzusammensetzung kann der Bereich der Temperaturunabhängigkeit des elektrischen Sensorwiderstands in den für Diesel- und "Mager-Otto-Motoren" relevanten Bereich von λ>2, d.h. $pO_2$>0.1 bar verschoben werden. Deutlich erkennbar wird dies aus Fig. 1. Dort ist der Widerstand eines Sensors, aufgebaut aus einer erfindungsgemäßen Materialzusammensetzung, über dem Sauerstoffpartialdruck des Abgases aufgetragen. Dabei wurde in der Ausgangsverbindung $SrTi_{1-z}Fe_zO_{3-\delta}$ ein Teil des Strontiums, welches zweiwertig auftritt, durch ein dreiwertiges Ion der Sorte M, welches sich auf einen Strontiumplatz einbaut, ersetzt. Diese Materialzusammensetzung, im folgenden Materialklasse 1a genannt, lautet somit: $Sr_{1-a}M_aTi_{1-z}Fe_zO_{3-\delta}$. Beispielhaft wurde in Fig. 1 M=Lanthan (La), a=0,05 und in Übereinstimmung mit EP 0 062 994 z=0,3 gewählt. Derselbe Effekt wird auch durch den Ersatz von Strontium durch vierwertige Ionen M, welche sich auf einen Strontiumplatz einbauen, erzielt. Ebenso führt der Ersatz von Titan und Eisen durch fünf- oder sechswertige Ionen M' gemäß $Sr(Ti_{1-z}Fe_z)_{1-b}M'_bO_{3-\delta}$ (Materialklasse 1b) zum gleichen Ergebnis. In Fig. 1 ist deutlich zu erkennen, wie sich der Bereich der Temperaturunabhängigkeit des Sensorwiderstands im Vergleich zur EP 0 062 994 zu höheren Sauerstoffpartialdrücken hin verschoben hat; hier im Beispiel zu $pO_2{\approx}0,1$ bar, d.h. λ≈2).

Zur Materialklasse 1 zugehörig ist auch der vollständige oder teilweise Ersatz des zweiwertigen Strontiums durch ein anderes zweiwertiges Element N anzusehen, z.B. $N_{1-a}M_aTi_{1-z}Fe_z O_{3-\delta}$ oder $(Sr_{1-n}N_n)_{1-a}M_aTi_{1-z}Fe_zO_{3-\delta}$, bzw. $N(Ti_{1-z}Fe_z)_{1-b}M'_bO_{3-\delta}$ oder $(Sr_{1-n}N_n) (Ti_{1-z}Fe_z)_{1-b}M'_bO_{3-\delta}$. Typische Beispiele für N sind Barium (Ba) oder Calcium (Ca). Dabei kann n Werte von null (kein Ersatz des Strontiums) bis eins (vollständiger Ersatz des Strontium) annehmen, ohne daß sich die Sensoreigenschaften grundlegend ändern. δ kennzeichnet das Sauerstoffdefizit, das sich je nach Zusammensetzung aus der Elektroneutralitätsbedingung einstellt.

Ebenfalls zur Materialklasse 1 zugehörig sind Werkstoffe entsprechend der genannten Zusammensetzung, in denen das vierwertige Titan durch ein oder mehrere vierwertige Elemente ganz oder teilweise ersetzt wird. Auch hierbei ändern sich die Sensoreigenschaften nur unwesentlich. Typische Beispiele für derartige vierwertige Elemente sind Zirkonium (Zr) und Zinn (Sn).

Aus Fig. 2 erkennt man, wie sich der temperaturunabhängige Bereich des Sensorwiderstands aufgrund eines partiellen Ersatzes von Titan bzw. Eisen durch ein dreiwertiges oder zweiwertiges Ion M'' gemäß $Sr(Ti_{1-z}Fe_z)_{1-c}M''_cO_{3-\delta}$ (Materialklasse 2a) zu kleineren Sauerstoffpartialdrücken und damit zu einem kleineren Abgassauerstoffgehalt hin verschiebt. Dies wird hier gezeigt am Beispiel z=0,3, M''=Gallium (Ga) und c=0,05. Der gleiche Effekt wird erzielt durch den Ersatz des Strontiums durch ein einwertiges Ion M'''. Die Zusammensetzung lautet dann $Sr_{1-d}M'''_dTi_{1-z}Fe_zO_{3-\delta}$ (Materialklasse 2b). Mit den Materialklassen 1 und 2 steht somit ein Materialsystem zur Verfügung, das es abhängig von seiner Zusammensetzung erlaubt, einen resisitiven Sauerstoffsensor herzustellen, dessen Sensorwiderstand einen Bereich einer verschwindenden Temperaturabhängigkeit, der zu beliebigen Sauerstoffpartialdrücken hin verschiebbar ist, aufweist. Für den Ersatz des Strontiums durch ein zweiwertiges Ion bzw. den Ersatz des Titans durch ein vierwertiges Ion gilt das entsprechende.

In Fig. 2 fällt auf, daß in dem Bereich, in dem der Sensorwiderstand noch eine Temperaturabhängigkeit aufweist, sein TKR<0 ist, wohingegen die Sensorkennlinie aus Fig. 1 im nicht temperaturunabhängigen Bereich einen TKR>0 besitzt. Aus einer Kombination zweier aus den Materialklassen 1 und 2 aufgebauten Sensoren, welche geeignet elektrisch verschaltet werden, kann demnach ein Sensor, der im gesamten für magere Verbrennungskraftmaschinen vorkommenden Abgasbereich eine noch geringere bzw. bei geeigneter Wahl der Zusammensetzung verschwindende Temperaturabhängigkeit besitzt, hergestellt werden. Eine solche Kombination kann aber auch eine beliebige Kombination der Materialklassen 1 und 2 zu einer Materialklasse 3 sein, aus der dann der Sensor aufgebaut wird. In Fig. 3 wird ein solches Beispiel dargestellt. Aufgrund einer besonders geeigneten Kombination der Materialklassen 1a und 2a, und zwar hier im Verhältnis 1:1, ist im gesamten Temperaturbereich der Temperaturkoeffizient des Sensorwiderstands betragsmäßig kleiner als bei jeder Materialklasse 1a oder 2a einzeln. Eine große Variation des Temperaturkoeffizienten des Sensorwiderstands und seines temperaturunabhängigen Sauerstoffpartialdruckbereiches kann durch eine geeignete Kombination der Parameter a und/oder b, c und/oder d und dem Mischungsverhältnis erzielt werden.

In Fig. 4 ist eine mögliche sehr einfache Ausführungsform 10 in Dickschichttechnik dargestellt. Auf der Oberseite 14 eines Substrates 12 befinden sich vier elektrische Anschlußbahnen 20, 22, 24, 26. An einem Ende 30 sind die Anschlußbahnen wie skizziert mit einer gassensitiven Schicht 32 bestehend aus den Materialklassen 1 oder 2 oder 3 bedeckt. Am gegenüberliegenden Ende sind Anschluß 34 mit Kontaktflächen zur Anbringung elektrischer Zuleitungen vorgesehen. Somit kann der Schichtwiderstand in Vierdrahttechnik gemessen werden. Kontaktwiderstände zwischen Elektrode und Schichtmaterial spielen dann keine Rolle mehr. Auf der Unterseite 16 des Substrates 12 ist eine Heizleiterbahn 40 aufgebracht, welche die gassensitive Schicht auf die in den Figuren 1 bis 3 gezeigten Temperaturbereich aufheizt.

Eine genaue Temperaturregelung erübrigt sich bei den erfindungsgemäßen Materialzusammensetzungen. Ein zugehöriges Sensorgehäuse ist nicht dargestellt.

In einem Beispiel wird nachfolgend die Herstellung eines erfindungsgemäßen Pulvers für die Materialklasse 1a) beschrieben. Es werden $SrCO_3$, $M_2O_3$, $TiO_2$ und $Fe_2O_3$ so eingewogen, daß das gewünschte Stöchiometrieverhältnis erzielt wird. Bei z=0,3, a=0,05 und M=La muß ein Massenverhältnis von $SrCO_3$, $La_2O_3$, $TiO_2$ und $Fe_2O_3$, wie aus den Molmassen berechnet, so eingewogen werden, daß das Atomverhältnis Sr:La:Ti:Fe 19:1:14:6 beträgt. Da $La_2O_3$ hygroskopisch ist, wird es zuvor bei ca. 850°C geglüht und anschließend heiß eingewogen. Ein typischer Ansatz von etwa 50g Rohpulver wird dann in einen Mahlbecher zusammen mit einem Mahlmedium, wozu beispielsweise ein Lösungsmittel wie z.B. Cyclohexan oder Isopropanol verwendet wird, gefüllt, mit Mahlkugeln z.B. aus Achat, Durchmesser 10 mm bei einer Anzahl von 50 Stück bzw. ein geringerer Kugeldurchmesser bei entsprechend größerer Mahlkugelstückzahl versetzt und ein bis vier Stunden lang in einer Planetenkugelmühle vermischt. Das derart vermischte Mahlgut wird getrocknet, von den Mahlkugeln getrennt, in einen Tiegel gefüllt und in einem Ofen in Luftatmosphäre bei 1200°C 15 Stunden lang gebrannt. Das abgekühlte Pulver weist dann die gewünschte Materialzusammensetzung auf, was z.B. durch Röntgendiffraktometrie nachgewiesen wird. Ein derart gebranntes Pulver muß noch mittels eines weiteren Mahlschrittes zerkleinert werden, um eine für den weiteren Sensorherstellprozeß geeignete Pulverkorngrößenverteilung zu besitzen. Ein typischer Mahlvorgang wird wie oben beschrieben ausgeführt, jedoch finden hierzu 7-10 Kugeln je 20 mm Durchmesser Verwendung. Ebenso erfolgt eine Zerkleinerung des Pulvers in einer Attritormühle oder einer Ringspaltkugelmühle. Das getrocknete und von den Mahlkugeln getrennte Pulver wird dann zur Sensorherstellung benutzt.

In Analogie zum beschriebenen Prozeß werden auch die Pulver der Materialklassen 1b, 2a, 2b und 3 hergestellt. Je nach Zusammensetzung läßt sich dann $M_2O_3$ durch die entsprechenden Oxide, Carbonate oder Oxycarbonate als Rohmaterial ersetzen. Diese werden der dann gültigen Stöchiometrie entsprechend eingewogen.

Aus den nach Beispiel 1 hergestellten Ausgangsmaterialien werden Sensoren wie folgt hergestellt. Die Pulver werden in eine geeignete Form gebracht, evtl. kann dazu auch ein geeigneter Binder benutzt werden, falls nötig verpreßt und bei Temperaturen zwischen 1300°C und 1400°C in Luft gesintert. Typische Abmaße eines Sinterkörpers sind 25mm x 3mm x 0,2mm. Dieser Sensorkörper wird dann mit Platindrähtchen kontaktiert, welche mit einer Platineinbrennpaste fixiert werden. Die Paste kann bei z.B. 1050°C eingebrannt werden. Es werden zwei, drei oder vier solcher Platinelektroden aufgebracht. Entsprechend erfolgt dann die Widerstandsmessung mittels Zweidraht-, Dreidraht- oder Vierdrahtmessung. Eine einfache Heizung, bestehend aus einem Heizdraht und einer elektrischen Isolierung, die erforderlich ist, um Sensor und Heizung voneinander zu trennen, muß noch angebracht werden, um eine zu niedrige Temperatur des Abgases auszugleichen, und um den Sensor möglichst frühzeitig auf Betriebstemperatur zu bringen. Zuletzt wird der Sensor in ein geeignetes Schutzgehäuse eingebracht.

Alternativ kann ein erfindungsgemäßer Sensor in Dickschichttechnik aufgebaut werden. Die Pulver aus den nach dem oben genannten Prozeß hergestellten Ausgangsmaterialien werden mit geeigneten Medien versetzt, die das Ausgangsmaterial siebdruckfähig machen. Auf ein Substrat z.B. aus $Al_2O_3$ oder $ZrO_2$ werden in Siebdrucktechnik entsprechende Anschlußbahnen etwa aus Gold oder Platin gedruckt, um den Sensorwiderstand in Zweidraht-, Dreidraht- oder Vierdrahtanordnung messen zu können. Diese Bahnen werden typischerweise in einer Luftatmosphäre eingebrannt. Darauf wird die Sensorschicht gedruckt und ebenfalls eingebrannt. Auf die Rückseite des Sensors wird noch eine Heizschicht aufgebracht, welche die oben beschriebenen Funktionen besitzt. An die Elektroden der Meßbahnen und der Heizbahnen werden Zuleitungen angebracht.

Der Aufbau erfolgt entsprechend Fig. 4. Ein geeignetes, mit elektrischen Durchführungen versehenes Gehäuse sorgt für mechanische Stabilität und schützt den Sensor.

Die voranstehend beschriebenen sauerstoffsensitiven Widerstandsmaterialien eignen sich für eine Vielzahl von Anwendungsfallen. So ist eine Verwendung vorgesehen für Sauerstoffsensoren zur Bestimmung des Sauerstoffgehaltes in Brennstoff/Luftgemischen, im Abgas von Verbrennungskraftmaschinen, in Entstickungs- oder Entschwefelungsanlagen, in Sinteröfen, in Bioreaktoren und in Vorrichtungen, welche aufgrund der Verbrennung insbesondere von kohlenstoff-, kohlenwasserstoffoder wasserstoffreicher Brennstoffe thermische Energie als Nutzenergie erzeugen. Dabei ist jeweils eine Anpassung des Widerstandsmaterials an den jeweils vorherrschenden Sauerstoffpartialdrucks vorgesehen, um eine weitgehende Temperaturunabhängigkeit in diesem Arbeitspunkt zu gewährleisten.

## LITERATUR

[1] Kleitz M., Siebert E., Fabry P., Fouletier J.: Solid-State Electrochemical Sensors.
In: Sensors. A comprehensive Survey. Chemical and Biochemical Sensors Part I. Göpel W. et al. (Hrsg.), VCH-Verlag, Weinheim, 1991, Seite 341-428.
[2] Schönauer U.: Dickschicht Sauerstoffsensoren auf der Basis keramischer Halbleiter. Technisches Messen 56 [6] 260-263, 1989.
[3] Gerblinger J.: Sauerstoffsensoren auf der Basis gesputterter Strontiumtitanat Schichten. Dissertation, Karlsruhe 1991.
[4] Schönauer U.: Dickschicht Sauerstoffsensoren auf der Basis keramischer Halbleiter. Technisches Messen 56 [6] 260-263, 1989.
[5] Fleischer M.: Präparation und Charakterisierung von $Ga_2O_3$-Dünnschichten. Untersuchung der gassensitiven elektrischen Leitfähigkeitseigenschaften. Dissertation, München 1992.
[6] Blase R.: Temperaturunabhängige Sauerstoffsensoren mit kurzer Einstellzeit auf der Basis von $La_2CuO_{4+\delta}$-Dickschichten. Dissertation, Karlsruhe 1996.

## Patentansprüche

1. Sauerstoffsensitives Widerstandsmaterial auf der Basis komplexer Metalloxide der allgemeinen Formel

    a)

$$(Sr_{1-n}N_n)(Ti_{1-z}Fe_z)O_{3-\delta},$$

    wobei
    Sr für Strontium, N für Barium (Ba), Calcium (Ca), Magnesium (Mg), Zink (Zn), Cadmium (Cd), Quecksilber (Hg), Blei (Pb) oder für eine Mischung aus zwei oder mehreren dieser zweiwertigen Elemente und n für eine Zahl zwischen null und eins, d.h. $0 \leq n \leq 1$,
    Ti für Titan, Fe für Eisen und z für eine Zahl größer ein Zehntel und kleiner oder gleich sechs Zehntel, d.h. $0,1 < z \leq 0,6$,
    O für Sauerstoff und $\delta$ für das Sauerstoffdefizit, das sich je nach Zusammensetzung aus der Elektroneutralitätsbedingung einstellt, steht

    b) und das Widerstandsmaterial einen weitgehend temperaturunabhängigen Arbeitspunkt des Sauerstoffpartialdrucks aufweist, **dadurch gekennzeichnet, daß**

    c) die Lage des Arbeitspunkts veränderbar ist, indem

    d) zur Veränderung des Arbeitspunkts hin zu höherem Sauerstoffpartialdruck:

        d1) zweiwertiges $(Sr_{1-n}N_n)$ teilweise ersetzt wird durch dreiund/oder vierwertiges M, wobei M für ein Element der Lanthaniden (Ordnungszahl 57 bis 71 im Periodensystem der Elemente) oder für Yttrium (Y), Indium (In) oder Thallium (T1) oder aber für eine Mischung aus zwei oder mehreren dieser Elemente steht, gemäß der Formel $(Sr_{1-n}N_n)_{1-a}M_aTi_{1-z}Fe_zO_{3-\delta}$, im folgenden Materialklasse 1a genannt,

oder/und

d2) vierwertiges $(Ti_{1-z}Fe_z)$ teilweise ersetzt wird durch fünf- und/oder sechswertiges M', wobei M' für Phosphor (P), Vanadium (V), Arsen (As), Niob (Nb), Antimon (Sb), Tantal (Ta), Molybdän (Mo), Wolfram (W) oder für eine Mischung aus diesen Elementen steht, gemäß der allgemeinen Formel (Sr1-nNn)(Ti1-zFez)1-bM'bO3-δ, im folgenden Materialklasse 1b genannt, **oder/und**

e) zur Veränderung des Arbeitspunkts hin zu niedrigerem Sauerstoffpartialdruck

e1) vierwertiges $(Ti_{1-z}Fe_z)$ teilweise ersetzt wird durch drei und/oder zweiwertiges M", wobei M" für Aluminium (Al), Scandium (Sc), Gallium (Ga), Chrom (Cr), Mangan (Mn), Kobalt (Co), Nickel (Ni) oder für eine Mischung aus zwei oder mehreren dieser Elemente steht, gemäß der Formel $(Sr_{1-n}N_n)(Ti_{1-z}Fe_z)_{1-c}M''_cO_{3-\delta}$ - im folgenden Materialklasse 2a genannt, **oder/und**

e2) zweiwertiges $(Sr_{1-n}N_n)$ teilweise ersetzt wird durch einwertiges M''', wobei M''' für Lithium (Li), Natrium (Na), Kalium (K), Rubidium (Rb), Caesium (Cs), Kupfer (Cu), Silber (Ag) oder für eine Mischung aus diesen Elementen steht, gemäß der Formel $(Sr_{1-n}N_n)_{1-d}M'''_dTi_{1-z}Fe_z O_{3-\delta}$ - im folgenden Materialklasse 2b genannt,

f) wobei a, b, c, d jeweils für eine Zahl größer als null und kleiner oder gleich ein halb, d.h. 0<a,b,c,d≤0,5 steht.

2. Sauerstoffsensitives Widerstandsmaterial nach Anspruch 1, **dadurch gekennzeichnet, daß** das Titan ganz oder teilweise durch ein anderes vierwertiges Element, namentlich Silizium (Si), Germanium (Ge), Zirkonium (Zr), Zinn (Sn), Cer (Ce) oder Hafnium (Hf) ersetzt ist.

3. Sauerstoffsensitives Widerstandsmaterial nach Anspruch 2 **dadurch gekennzeichnet, daß** der ersetzte Teil des Titans kleiner als 50% ist und für die in Anspruch 1 aufgeführten Parameter steht

z für eine Zahl größer oder gleich zwei Zehntel und kleiner oder gleich fünfundvierzig hundertstel, d.h. 0,2≤z≤0,45,

a für eine Zahl größer null und kleiner oder gleich z, d.h. 0<a≤z,

b für eine Zahl größer null und kleiner oder gleich z, d.h. 0<b≤z,

c für eine Zahl größer null und kleiner oder gleich z, d.h. 0<c≤z,

d für eine Zahl größer null und kleiner oder gleich z, d.h. 0<d≤z und

n für eine Zahl größer oder gleich null und kleiner oder gleich eins, d.h. 0≤n≤1.

4. Sauerstoffsensitives Widerstandsmaterial nach Anspruch 2 **dadurch gekennzeichnet, daß** der ersetzte Teil des Titans kleiner als 20% ist und für die in Anspruch 1 aufgeführten Parameter steht

z für eine Zahl größer oder gleich zwei Zehntel und kleiner oder gleich fünfundvierzig Hundertstel, d.h. 0,2≤z≤0,45,

a für eine Zahl größer null und kleiner oder gleich ein Zehntel, d.h. 0<a≤0,1,

b für eine Zahl größer null und kleiner oder gleich ein Zehntel, d.h. 0<b≤0,1,

c für eine Zahl größer null und kleiner oder gleich ein Zehntel, d.h. 0<c≤0,1,

d für eine Zahl größer null und kleiner oder gleich ein Zehntel, d.h. 0<d≤0,1 und

n für eine Zahl größer oder gleich null und kleiner oder gleich eins, d.h. 0≤n≤1.

5. Sauerstoffsensitives Widerstandsmaterial nach Anspruch 4 **dadurch gekennzeichnet, daß** der ersetzte Teil des Titans kleiner als 20% ist und für die in Anspruch 1 aufgeführten Parameter bezüglich Materialklasse 1a steht

z für eine Zahl größer oder gleich zwei Zehntel und kleiner oder gleich fünfundvierzig hundertstel, d.h. 0,2≤z≤0,45,

a für eine Zahl größer null und kleiner oder gleich ein Zehntel, d.h. 0<a≤0,1,

n für eine Zahl größer oder gleich null und kleiner oder gleich eins, d.h. 0≤n≤1,

M für Lanthan (La) oder Yttrium (Y) und

N für Barium (Ba), Calcium (Ca), Magnesium (Mg), Cadmium (Cd), Blei (Pb) oder für eine Mischung aus zwei oder mehreren dieser Elemente.

6. Sauerstoffsensitives Widerstandsmaterial nach Anspruch 2 **dadurch gekennzeichnet, daß** der ersetzte Teil des Titans kleiner als 20% ist und für die in Anspruch 1 aufgeführten Parameter bezüglich Materialklasse ib steht

z für eine Zahl größer oder gleich zwei Zehntel und kleiner oder gleich fünfundvierzig hundertstel, d.h. 0,2≤z≤0,45,

b   für eine Zahl größer null und kleiner oder gleich ein Zehntel, d.h. $0 < b \leq 0,1$,

n   für eine Zahl größer oder gleich null und kleiner oder gleich eins, d.h. $0 \leq n \leq 1$,

M'  für die Elemente Niob (Nb), Antimon (Sb) oder Tantal (Ta) und

N   für die Elemente Barium (Ba), Calcium (Ca), Magnesium (Mg), Cadmium (Cd), Blei (Pb) oder für eine Mischung aus zwei oder mehreren dieser Elemente.

7.  Sauerstoffsensitives Widerstandsmaterial nach Anspruch 2 **dadurch gekennzeichnet, daß** der ersetzte Teil des Titans kleiner als 20% ist und für die in Anspruch 1 aufgeführten Parameter bezüglich Materialklasse 2a steht

z   für eine Zahl größer oder gleich zwei Zehntel und kleiner oder gleich fünfundvierzig hundertstel, d.h. $0,2 \leq z \leq 0,45$,

c   für eine Zahl größer null und kleiner oder gleich ein Zehntel, d.h. $0 < c \leq 0,1$,

n   für eine Zahl größer oder gleich null und kleiner oder gleich eins, d.h. $0 \leq n \leq 1$,

M"  für die Elemente Gallium (Ga) oder Aluminium (Al) und

N   für die Elemente Barium (Ba), Calcium (Ca), Magnesium (Mg), Cadmium (Cd), Blei (Pb) oder für eine Mischung aus zwei oder mehreren dieser Elemente.

8.  Sauerstoffsensitives Widerstandsmaterial nach Anspruch 2 **dadurch gekennzeichnet, daß** der ersetzte Teil des Titans kleiner als 20% ist und für die in Anspruch 1 aufgeführten Parameter bezüglich den Materialklassen 1a und 2a in beliebigem Mischungsverhältnis steht

z   für eine Zahl größer oder gleich zwei Zehntel und kleiner oder gleich fünfundvierzig hundertstel, d.h. $0,2 \leq z \leq 0,45$,

a   für eine Zahl größer null und kleiner oder gleich ein Zehntel, d.h. $0 < a \leq 0,1$,

c   für eine Zahl größer null und kleiner oder gleich ein Zehntel, d.h. $0 < c \leq 0,1$,

n   für eine Zahl größer oder gleich null und kleiner oder gleich eins, d.h. $0 \leq n \leq 1$,

M   für die Elemente Lanthan (La) oder Yttrium (Y),

M"  für die Elemente Gallium (Ga) oder Aluminium (Al) und

N   für die Elemente Barium (Ba), Calcium (Ca), Magnesium (Mg), Cadmium (Cd), Blei (Pb) oder aber für eine Mischung aus zwei oder mehreren dieser Elemente.

9.  Sauerstoffsensitives Widerstandsmaterial nach Anspruch 2, **dadurch gekennzeichnet, daß** der gesamte ersetzte Teil des Titans kleiner als 20% ist und die in Anspruch 1 bezeichneten Materialklassen 1a und 2a in beliebigem Mischungsverhältnis zueinander stehen, wobei die dort aufgeführten Parameter

z   für eine Zahl größer oder gleich zwei Zehntel und kleiner oder gleich fünfundvierzig hundertstel, d.h. $0,2 \leq z \leq 0,45$,

a   für eine Zahl größer null und kleiner oder gleich ein Zehntel, d.h. $0 < a \leq 0,1$,

c   für eine Zahl größer null und kleiner oder gleich ein Zehntel, d.h. $0 < c \leq 0,1$,

n   für eine Zahl größer oder gleich null und kleiner oder gleich eins, d.h. $0 \leq n \leq 1$,

M   für das Element Lanthan (La),

M"  für das Element Gallium (Ga),

N   für die Elemente Barium (Ba), Calcium (Ca), Magnesium (Mg) oder eine Mischung aus zwei oder mehreren dieser Elemente,

stehen, so daß die Gesamtzusammensetzung dann $[(Sr_{1-n}N_n)_{1-Aa}M_{Aa}][(Ti_{1-z}Fe_z)_{1-(1-A)c} \; M''_{(1-A)c}]O_{3-\delta}$ lautet,
wobei A den Anteil der Materialklasse 1a in der Mischung der beiden Materialklassen 1a und 2a in der Gesamtzusammensetzung angibt.

10. Sauerstoffsensitives Widerstandsmaterial nach einem der vorangegangenen Ansprüche, wobei wenigstens zwei Materialien verschiedener Materialklassen gemischt werden, **dadurch gekennzeichnet, daß** eines der beiden gassensitiven Materialien einen negativen Temperaturkoeffizienten des elektrischen Widerstandes und das andere einen positiven Temperaturkoeffizienten des elektrischen Widerstandes aufweist, wobei die beiden Materialklassen und die Art der elektrischen Verschaltung derart gewählt werden, daß der Betrag des resultierenden Temperaturkoeffizienten des elektrischen Widerstandes kleiner wird als der Betrag der einzelnen Temperaturkoeffizienten oder vollständig verschwindet.

11. Verwendung eines sauerstoffsensitiven Widerstandsmaterials nach einem der vorangehenden Ansprüche 1 bis 10 für einen Sauerstoffsensor zur Bestimmung des Sauerstoffgehaltes in Brennstoff/Luftgemischen.

12. Verwendung eines sauerstoffsensitiven Widerstandsmaterials nach einem der vorangehenden Ansprüche 1 bis 10 für einen Sauerstoffsensor zur Bestimmung des Sauerstoffgehaltes des mageren Abgases von Verbrennungskraftmaschinen.

13. Verwendung eines sauerstoffsensitiven Widerstandsmaterials nach einem der vorangehenden Ansprüche 1 bis 10 für einen Sauerstoffsensor zur Bestimmung des Sauerstoffgehaltes in Entstickungs- oder Entschwefelungsanlagen.

14. Verwendung eines sauerstoffsensitiven Widerstandsmaterials nach einem der vorangehenden Ansprüche 1 bis 10 für einen Sauerstoffsensor zur Bestimmung des Sauerstoffgehaltes in Sinteröfen.

15. Verwendung eines sauerstoffsensitiven Widerstandsmaterials nach einem der vorangehenden Ansprüche 1 bis 10 für einen Sauerstoffsensor zur Bestimmung des Sauerstoffgehaltes in Vorrichtungen, welche aufgrund der Verbrennung insbesondere von kohlenstoff-, kohlenwasserstoff- oder wasserstoffreicher Brennstoffe thermische Energie als Nutzenergie erzeugen.

16. Verwendung eines sauerstoffsensitiven Widerstandsmaterials nach einem der vorangehenden Ansprüche 1 bis 10 für einen Sauerstoffsensor zur Bestimmung des Sauerstoffgehaltes in Bioreaktoren.

17. Verfahren zur Herstellung eines sauerstoffsensitiven Widerstandsmaterials nach einem oder mehreren der vorangegangenen Ansprüche, **dadurch gekennzeichnet, daß** die Oxide, Carbonate, und/oder Oxycarbonate der im sensitiven Material vorkommenden Metalle im stöchiometrischen Verhältnis eingewogen, fein vermischt, in einem organischen Lösungsmittel vermahlen, getrocknet und gebrannt werden, und das so erhaltene Metalloxidpulver zu einer Paste verarbeitet wird, welche auf ein vorzugsweise elektrisch isolierendes Substrat aufgebracht und eingebrannt wird sowie die zur Messung des elektrischen Widerstandes nötigen Elektroden entweder vor oder nach dem Einbrennen der Metalloxidpaste aufgebracht werden.

**Claims**

1. An oxygen-sensitive resistance material on the basis of complex metal oxides of the general formula

   a)

   $$(Sr_{1-n}N_n)(Ti_{1-z}Fez)O_{3-\delta},$$

   where
   Sr stands for Strontium, N for Barium (Ba), Calcium (Ca), Magnesium (Mg), Zinc (Zn), Cadmium (Cd), Mercury (Hg), Lead (Pb) or for a mixture of two or several of these bivalent elements and n for a number between zero and one, i.e. $0 \leq n \leq 1$,

Ti stands for Titanium, Fe for Iron and z for a number bigger than one tenth and smaller than or equivalent to six tenths, i.e. $0.1 < z \leq 0.6$,
O stands for Oxygen and $\delta$ for the oxygen deficit which arises - depending upon the composition - from the requirement of electro-neutrality,

b) and where the resistance material has a largely temperature-independent operating point of the oxygen partial pressure, wherein

c) the position of the operating point is changeable in that

d) for changing the operating point towards a higher oxygen partial pressure:

   d1) bivalent $(Sr_{1-n}N_n)$ is partially replaced by trivalent and/or quadrivalent M where M stands for an element of the lanthanides (ordinal number 57 to 71 in the Periodic System of the elements) or for Yttrium (Y), Indium (In) or Thallium (Tl) or for a mixture of two or several of these elements, pursuant to the formula $(Sr_{1-n}N_n)_{1-a}M_aTi_{1-z}FezO_{3-\delta}$, hereinafter referred to as material class 1a, or/and

   d2) quadrivalent $(Ti_{1-z}Fe_z)$ is partially replaced by quinquevalent and/or hexavalent M' where M' stands for Phosphorus (P), Vanadium (V), Arsenic (As), Niobium (Nb), Stibium (Sb), Tantalum (Ta), Molybdenum (Mo), Wolfram (W) or for a mixture of these elements, pursuant to the general formula $(Sr_{1-n}N_n)(Ti1-zFez)1-bM'b03-\delta$, hereinafter referred to as material class 1b, or/and

e) for changing the operating point towards a lower oxygen partial pressure:

   e1) quadrivalent $(Ti_{1-z}Fez)$ is partially replaced by trivalent and/or bivalent M'' where M'' stands for Aluminium (Al), Scandium (Sc), Gallium (Ga), Chromium (Cr), Manganese (Mn), Cobalt (Co), Nickel (Ni) or for a mixture of two or several of these elements, pursuant to the formula $(Sr1_{-n}N_n)(Ti_{1-z}Fe_z)_{1-c}M''_cO_{3-\delta}$, hereinafter referred to as material class 2a, or/and

   e2) bivalent $(Sr_{1-n}N_n)$ is partially replaced

by a monovalent M''' where M''' stands for Lithium (Li), Sodium (Na), Potassium (K), Rubidium (Rb), Caesium (Cs), Copper (Cu), Silver (Ag) or of a mixture of these elements,
pursuant to the formula $(Sr_{1-n}N_n)_{1-d}M'''_dTi_{1-z}\text{-}Fe_zO_{3-\delta}$, hereinafter referred to as material class 2b,

f) wherein a, b, c, d stand in each case for a number bigger than zero and smaller than or equivalent to one half, i.e. $0<a,b,c,d\leq0.5$.

2. An oxygen-sensitive resistance material pursuant to Claim 1 wherein Titanium is wholly or partially replaced by another quadrivalent element, that is by Silicium (Si), Germanium (Ge), Zirconium (Zr), Tin (Sn), Cerium (Ce) or Hafnium (Hf).

3. An oxygen-sensitive resistance material pursuant to Claim 2 wherein the replaced part of the Titanium is smaller than 50 % and stands for the parameters listed in Claim 1

z   for a number bigger than or equivalent to two tenths and smaller than or equivalent to forty-five hundredth, i.e. $0.2\leq z\leq0.45$,
a   for a number bigger than zero and smaller than or equivalent to z, i.e. $0<a\leq z$,
b   for a number bigger than zero and smaller than or equivalent to z, i.e. $0<b\leq z$,
c   for a number bigger than zero and smaller than or equivalent to z, i.e. $0<c\leq z$,
d   for a number bigger than zero and smaller than or equivalent to z, i.e. $0<d\leq z$,
n   for a number bigger than or equivalent to zero and smaller than or equivalent to one, i.e. $0\leq n\leq1$.

4. An oxygen-sensitive resistance material pursuant to Claim 2 wherein the replaced part of the Titanium is smaller than 20 % and stands for the parameters listed in Claim 1

z   for a number bigger than or equivalent to two tenths and smaller than or equivalent to forty-five hundredth, i.e. $0.2\leq z\leq0.45$,
a   for a number bigger than zero and smaller than or equivalent to one tenth, i.e. $0<a\leq0.1$,
b   for a number bigger than zero and smaller than or equivalent to one tenth, i.e. $0<b\leq0.1$,
c   for a number bigger than zero and smaller than or equivalent to one tenth, i.e. $0<c\leq0.1$,
d   for a number bigger than zero and smaller than or equivalent to one tenth, i.e. $0<d\leq0.1$,
n   for a number bigger than or equivalent to zero and smaller than or equivalent to one, i.e. $0\leq n\leq1$.

5. An oxygen-sensitive resistance material pursuant to Claim 4 wherein the replaced part of the Titanium is smaller than 20 % and stands for the parameters listed in Claim 1 regarding material class 1a

z   for a number bigger than or equivalent to two tenths and smaller than or equivalent to forty-five hundredth, i.e. $0.2\leq z\leq0.45$,
a   for a number bigger than zero and smaller than or equivalent to one tenth, i.e. $0<a\leq0.1$,
n   for a number bigger than or equivalent to zero and smaller than or equivalent to one, i.e. $0\leq n\leq1$,
M   for Lanthanum (La) or Yttrium (Y) and
N   for Barium (Ba), Calcium (Ca), Magnesium (Mg), Cadmium (Cd), Lead (Pb) or for a mixture of two or several of these elements.

6. An oxygen-sensitive resistance material pursuant to Claim 2 wherein the replaced part of the Titanium is smaller than 20 % and stands for the parameters listed in Claim 1 regarding material class 1b

z   for a number bigger than or equivalent to two tenths and smaller than or equivalent to forty-five hundredth, i.e. $0.2\leq z\leq0.45$,
b   for a number bigger than zero and smaller than or equivalent to one tenth, i.e. $0<b\leq0.1$,
n   for a number bigger than or equivalent to zero and smaller than or equivalent to one, i.e. $0\leq n\leq1$,
M'  for the elements Niobium (Nb), Stibium (Sb) or Tantalium (Ta) and
N   for the elements Barium (Ba), Calcium (Ca), Magnesium (Mg), Cadmium (Cd), Lead (Pb) or for a mixture of two or several of these elements.

7. An oxygen-sensitive resistance material pursuant to Claim 2 wherein the replaced part of the Titanium is smaller than 20 % and stands for the parameters listed in Claim 1 regarding material class 2a

z   for a number bigger than or equivalent to two tenths and smaller than or equivalent to forty-five hundredth, i.e. $0.2\leq z\leq0.45$,
c   for a number bigger than zero and smaller than or equivalent to one tenth, i.e. $0<c\leq0.1$,
n   for a number bigger than or equivalent to zero and smaller than or equivalent to one, i.e. $0\leq n\leq1$,
M'' for the elements Gallium (Ga) or Aluminium (Al) and
N   for the elements Barium (Ba), Calcium (Ca), Magnesium (Mg), Cadmium (Cd), Lead (Pb) or for a mixture of two or several of these elements.

**8.** An oxygen-sensitive resistance material pursuant to Claim 2 wherein the replaced part of the Titanium is smaller than 20 % and stands for the parameters listed in Claim 1 regarding material classes 1a and 2a in any mixture ratio

$z$ for a number bigger than or equivalent to two tenths and smaller than or equivalent to forty-five hundredth, i.e. $0.2 \leq z \leq 0.45$,

$a$ for a number bigger than zero and smaller than or equivalent to one tenth, i.e. $0 < a \leq 0.1$,

$c$ for a number bigger than zero and smaller than or equivalent to one tenth, i.e. $0 < c \leq 0.1$,

$n$ for a number bigger than or equivalent to zero and smaller than or equivalent to one, i.e. $0 \leq n \leq 1$,

$M$ for the elements Lanthanum (La) or Yttrium (Y),

$M''$ M'' for the elements Gallium (Ga) or Aluminium (Al) and

$N$ for the elements Barium (Ba), Calcium (Ca), Magnesium (Mg), Cadmium (Cd), Lead (Pb) or for a mixture of two or several of these elements.

**9.** An oxygen-sensitive resistance material pursuant to Claim 2 wherein the entire replaced part of the Titanium is smaller than 20 % and wherein the material classes 1a and 2a designated in Claim 1 have any ratio of mixture with each other and wherein the parameters listed therein stand for the following:

$z$ for a number bigger than or equivalent to two tenths and smaller than or equivalent to forty-five hundredth, i.e. $0.2 \leq z \leq 0.45$,

$a$ for a number bigger than zero and smaller than or equivalent to one tenth, i.e. $0 < a \leq 0.1$,

$c$ for a number bigger than zero and smaller than or equivalent to one tenth, i.e. $0 < c \leq 0.1$,

$n$ for a number bigger than or equivalent to zero and smaller than or equivalent to one, i.e. $0 \leq n \leq 1$,

$M$ for the element Lanthanium (La),

$M''$ for the element Gallium (Ga) and

$N$ for the elements Barium (Ba), Calcium (Ca), Magnesium (Mg) or for a mixture of two or several of these elements

so that the overall composition then reads $[(Sr_{1-n}N_n)_{1-Aa}M_{Aa}]\,[(Ti_{1-z}Fe_z)_{1-(1-A)c}\,M''_{(1-A)c}]\,O_{3-\delta}$ wherein A indicates the share of material class 1a in the mixture of the two material classes 1a and 2a in the overall composition.

**10.** An oxygen-sensitive resistance material pursuant to one of the preceding claims wherein at least two materials of different material classes are mixed **characterised in that** one of the two gas-sensitive materials has a negative temperature coefficient of the electrical resistance and the other a positive temperature coefficient of the electrical resistance where the two material classes and the circuit technique are selected in such a manner that the amount of the resulting temperature coefficient of the electrical resistance becomes smaller than the amount of the individual temperature coefficients or disappears completely.

**11.** The use of an oxygen-sensitive resistance material pursuant to one of the preceding claims 1 to 10 for an oxygen sensor for determining the oxygen content in fuel/air mixtures.

**12.** The use of an oxygen-sensitive resistance material pursuant to one of the preceding claims 1 to 10 for an oxygen sensor for determining the oxygen content in lean exhaust gas of combustion engines.

**13.** The use of an oxygen-sensitive resistance material pursuant to one of the preceding claims 1 to 10 for an oxygen sensor for determining the oxygen content in NOx removal or de-sulphurisation plants.

**14.** The use of an oxygen-sensitive resistance material pursuant to one of the preceding claims 1 to 10 for an oxygen sensor for determining the oxygen content in sintering furnaces.

**15.** The use of an oxygen-sensitive resistance material pursuant to one of the preceding claims 1 to 10 for an oxygen sensor for determining the oxygen content in appliances which use thermal energy as useful energy on the basis of the combustion in particular of fuels with a high content of carbon, hydrocarbon or hydrogen.

**16.** The use of an oxygen-sensitive resistance material pursuant to one of the preceding claims 1 to 10 for an oxygen sensor for determining the oxygen content in bio-reactors.

**17.** A method for the manufacture of an oxygen-sensitive resistance material pursuant to one or several of the preceding claims wherein the oxides, carbonates and/or oxy-carbonates of the metals occurring in the sensitive material are weighed in, finely mixed, comminuted in an organic solvent, dried and burnt in a stoichiometric ratio and wherein the metal oxide powder thus obtained is processed into a paste which is applied to and burnt into a preferably electrically insulating substrate and wherein the electrodes required for measuring the electrical resistance are applied either before or after the burning-in of the metal oxide paste.

## Revendications

1. Matériau pour une résistance, sensible à l'oxygène, formé sur la base d'oxydes complexes métalliques de la formule générale

    a)

    $$(Sr_{1-n}N_n) (Ti_{1-z}Fe_z) O_{3-\delta},$$

    où

    Sr signifie strontium, N un des éléments suivants que sont baryum (Ba), calcium (Ca), magnésium (Mg), zinc (Zn), cadmium (Cd), mercure (Hg) ou plomb (Pb) ou un mélange de ces éléments bivalents, et n un nombre entre zéro et un, à savoir $0 \leq n \leq 1$,
    Ti signifie titane, Fe le fer, et z un nombre supérieur à un dixième et inférieur ou égal à six dixièmes, à savoir $0,1 < z \leq 0,6$,
    O signifie oxygène et $\delta$ le déficit en oxygène selon la composition spécifique et résultant de la condition de neutralité électrique,

    b) le matériau pour une résistance a un point de travail de la pression partielle de l'oxygène sensiblement indépendant de la température, **caractérisé en ce que**

    c) le point de travail est variable en faisant :

    d) pour un changement vers une pression partielle de l'oxygène plus élevée

        d1) remplacer du $(Sr_{1-n}N_n)$ bivalent partiellement par un M trivalent ou tetravalent, où M est un élément des lanthanides (numéro d'ordre 57 à 71 du système périodique des éléments) ou yttrium (Y) ou indium (I) ou thallium (Tl) ou encore un mélange de deux ou plusieurs de ces éléments, selon la formule $(Sr_{1-n}N_n)_{1-a}M_a Ti_{1-z} Fe_z O_{3-\delta}$, appelée par la suite classe de matériau 1a,
        et/ou

        d2) remplacer du $(Ti_{1-z}Fe_z)$ tetravalent partiellement par un M' pentavalent ou hexavalent où M' est phosphore (P), vanadium (V), arsenic (As), niobium (Nb), antimoine (Sb), tantale (Ta), molybdène (Mo), tungstène (W) ou un mélange de ces éléments, selon la formule générale $(Sr_{1-n}N_n) (Ti_{1-z}Fe_z)_{1-b} M'_b O_{3-\delta}$, appelée par la suite classe de matériau 1b
        et/ou

    e) pour un changement du point de travail vers une pression partielle d'oxygène moins élevée

        e1) remplacer du $(Ti_{1-z}Fe_z)$ tetravalent partiellement par du M" bivalent ou trivalent, où M" signifie aluminium (Al), scandium (Sc), gallium (Ga), chrome (Cr), manganèse (Mn) cobalt (Co) ou nickel (Ni) ou encore un mélange de deux ou plusieurs de ces éléments, selon la formule $(Sr_{1-n}N_n) (Ti_{1-z}Fe_z)_{1-c} M"_c O_{3-\delta}$, appelée par la suite classe de matériau 2a,
        et/ou

        e2) remplacer du $(Sr_{1-n}N_n)$ bivalent partiellement par du M''' monovalent, où M''' signifie lithium (Li), sodium (Na), kalium (K), rubidium (Rb), caesium (Cs), cuivre (Cu), argent (Ag) ou un mélange de ces éléments, selon la formule $(Sr_{1-n}N_n)_{1-d} M'''_d Ti_{1-z}Fe_z O_{3-\delta}$, appelée par la suite classe de matériau 2b,

    f) où a, b, c, d représentent chacun un nombre supérieur à zéro et inférieur ou égal à un demi, à savoir $0 < a,b,c,d \leq 0,5$.

2. Matériau pour une résistance, sensible à l'oxygène, selon la revendication 1, **caractérisé en ce que** le titane est replacé entièrement ou partiellement par un autre élément tetravalent, notamment silicium (Si), germanium (Ge), zirconium (Zr), étain (Sn), cérium (Ce) ou hafnium (Hf).

3. Matériau pour une résistance, sensible à l'oxygène, selon la revendication 2, **caractérisé en ce que** la partie remplacée du titane est inférieure à 50% et que les paramètres indiqués à la revendication 1 sont

    z   un nombre supérieur ou égal à deux dixièmes et inférieur ou égal à quarante cinq centièmes, à savoir $0,2 \leq z \leq 0,45$,
    a   un nombre supérieur à zéro et inférieur ou égal à z, à savoir $0 < a \leq z$,
    b   un nombre supérieur à zéro et inférieur ou égal à z, à savoir $0 < b \leq z$,
    c   un nombre supérieur à zéro et inférieur ou égal à z, à savoir $0 < c \leq z$,
    d   un nombre supérieur à zéro et inférieur ou égal à z, à savoir $0 < d \leq z$,
    n   un nombre supérieur ou égal à zéro et inférieur ou égal à un, à savoir $0 \leq n \leq 1$.

4. Matériau pour une résistance, sensible à l'oxygène, selon la revendication 2, **caractérisé en ce que** la partie remplacée du titane est inférieure à 20% et que les paramètres indiqués à la revendication 1 sont

- z  un nombre supérieur ou égal à deux dixièmes et inférieur ou égal à quarante cinq centièmes, à savoir $0{,}2 \leq z \leq 0{,}45$,
- a  un nombre supérieur à zéro et inférieur ou égal à un dixième, à savoir $0 < a \leq 0{,}1$,
- b  un nombre supérieur à zéro et inférieur ou égal à un dixième, à savoir $0 < b \leq 0{,}1$,
- c  un nombre supérieur à zéro et inférieur ou égal à un dixième, à savoir $0 < c \leq 0{.}1$,
- d  un nombre supérieur à zéro et inférieur ou égal à un dixième, à savoir $0 < d \leq 0{,}1$,
- n  un nombre supérieur ou égal à zéro et inférieur ou égal à un, à savoir $0 \leq n \leq 1$.

5.  Matériau pour une résistance, sensible à l'oxygène, selon la revendication 4, **caractérisé en ce que** la partie remplacée du titane est inférieure à 20% et que les paramètres indiqués à la revendication 1 sont pour la classe de matériau 1a

- z  un nombre supérieur ou égal à deux dixièmes et inférieur ou égal à quarante cinq centièmes, à savoir $0{,}2 \leq z \leq 0{,}45$,
- a  un nombre supérieur à zéro et inférieur ou égal à un dixième, à savoir $0 < a \leq 0{,}1$,
- n  un nombre supérieur ou égal à zéro et inférieur ou égal à un, à savoir $0 \leq n \leq 1$,
- M  lanthane (La) ou yttrium (Y) et
- N  baryum (Ba), calcium (Ca), magnésium (Mg) cadmium (Cd), plomb (Pb) ou un mélange de deux ou plusieurs de ces éléments.

6.  Matériau pour une résistance, sensible à l'oxygène, selon la revendication 2, **caractérisé en ce que** la partie remplacée du titane est inférieure à 20% et que les paramètres indiqués à la revendication 1 sont pour la classe de matériau 1 b

- z  un nombre supérieur ou égal à deux dixièmes et inférieur ou égal à quarante cinq centièmes, à savoir $0{,}2 \leq z \leq 0{,}45$,
- b  un nombre supérieur à zéro et inférieur ou égal à un dixième, à savoir $0 < b \leq 0{,}1$,
- n  un nombre supérieur ou égal à zéro et inférieur ou égal à un, à savoir $0 \leq n \leq 1$,
- M'  niobium (Nb), antimoine (Sb) ou tantale (Ta) et
- N  baryum (Ba), calcium (Ca), magnésium (Mg) cadmium (Cd), plomb (Pb) ou un mélange de deux ou plusieurs de ces éléments.

7.  Matériau pour une résistance, sensible à l'oxygène, selon la revendication 2, **caractérisé en ce que** la partie remplacée du titane est inférieure à 20% et que les paramètres indiqués à la revendication 1 sont pour la classe de matériau 2a

- z  un nombre supérieur ou égal à deux dixièmes et inférieur ou égal à quarante cinq centièmes, à savoir $0{,}2 \leq z \leq 0{,}45$,
- c  un nombre supérieur à zéro et inférieur ou égal à un dixième, à savoir $0 < c \leq 0{,}1$,
- n  un nombre supérieur ou égal à zéro et inférieur ou égal à un, à savoir $0 \leq n \leq 1$,
- M"  gallium (Ga) ou aluminium (Al) et
- N  baryum (Ba), calcium (Ca), magnésium (Mg) cadmium (Cd), plomb (Pb) ou un mélange de deux ou plusieurs de ces éléments.

8.  Matériau pour une résistance, sensible à l'oxygène, selon la revendication 2, **caractérisé en ce que** la partie remplacée du titane est inférieure à 20% et que les paramètres indiqués à la revendication 1 sont, pour les classes de matériau 1a et 2a en toutes proportions de mélange,

- z  un nombre supérieur ou égal à deux dixièmes et inférieur ou égal à quarante cinq centièmes, à savoir $0{,}2 \leq z \leq 0{,}45$,
- a  un nombre supérieur à zéro et inférieur ou égal à un dixième, à savoir $0 < a \leq 0{,}1$,
- c  un nombre supérieur à zéro et inférieur ou égal à un dixième, à savoir $0 < c \leq 0{,}1$,
- n  un nombre supérieur ou égal à zéro et inférieur ou égal à un, à savoir $0 \leq n \leq 1$,
- M  lanthane (La) ou yttrium (Y),
- M"  gallium (Ga) ou aluminium (Al) et
- N  baryum (Ba), calcium (Ca), magnésium (Mg), cadmium (Cd), plomb (Pb) ou un mélange de deux ou plusieurs de ces éléments.

9.  Matériau pour une résistance, sensible à l'oxygène, selon la revendication 2, **caractérisé en ce que** l'ensemble de la partie remplacée du titane est inférieure à 20% et que les classes de matériau 1a et 2a sont présentes en toutes proportions de mélange, les paramètres indiqués à la revendication 1 étant

- z  un nombre supérieur ou égal à deux dixièmes et inférieur ou égal à quarante cinq centièmes, à savoir $0{,}2 \leq z \leq 0{,}45$,
- a  un nombre supérieur à zéro et inférieur ou égal à un dixième, à savoir $0 < a \leq 0{,}1$,
- c  un nombre supérieur à zéro et inférieur ou égal à un dixième, à savoir $0 < c \leq 0{,}1$,
- n  un nombre supérieur ou égal à zéro et inférieur ou égal à un, à savoir $0 \leq n \leq 1$,
- M  lanthane (La),
- M"  gallium (Ga) et
- N  baryum (Ba), calcium (Ca), magnésium (Mg) ou un mélange de deux ou plusieurs de ces éléments,

de manière que la composition entière réponde à la formule

$$[(Sr_{1-n}N_n)_{1-Aa}M_{Aa}] [(Ti_{1-z}Fe_z)_{1-(1-A)c} M''_{(1-A)c}] O_{3-\delta}$$

où
A signifie la proportion de la classe de matériau 1a dans le mélange des classes de matériau 1a et 2a dans l'ensemble de la composition.

10. Matériau pour une résistance, sensible à l'oxygène, selon l'une quelconque des revendications précédentes, contenant un mélange d'au moins deux matériaux de classes de matériau différentes, **caractérisé en ce que** l'un des deux matériaux sensibles à un gaz a un coefficient de température négatif de la résistance électrique et l'autre a un coefficient de température positif de la résistance électrique, les deux classes de matériau et le type de liaison électrique entre eux étant choisis de manière que la valeur scalaire du coefficient de température résultant de la résistance électrique soit plus petit que la valeur scalaire de chacun des différents coefficients de température ou disparaisse entièrement.

11. Utilisation d'un matériau pour une résistance, sensible à l'oxygène, selon l'une des revendications 1 à 10 ci-avant pour un capteur de taux d'oxygène permettant de déterminer le taux d'oxygène dans un mélange d'un combustible avec de l'air.

12. Utilisation d'un matériau pour une résistance, sensible à l'oxygène, selon l'une des revendications 1 à 10 ci-avant pour un capteur de taux d'oxygène permettant de déterminer le taux d'oxygène dans les gaz d'échappement maigres de machines à combustion interne.

13. Utilisation d'un matériau pour une résistance, sensible à l'oxygène, selon l'une des revendications 1 à 10 ci-avant pour un capteur de taux d'oxygène permettant de déterminer le taux d'oxygène dans des installations d'extraction de nitrogène ou de soufre.

14. Utilisation d'un matériau pour une résistance, sensible à l'oxygène, selon l'une des revendications 1 à 10 ci-avant pour un capteur de taux d'oxygène permettant de déterminer le taux d'oxygène dans des fours de frittage.

15. Utilisation d'un matériau pour une résistance, sensible à l'oxygène, selon l'une des revendications 1 à 10 ci-avant pour un capteur de taux d'oxygène permettant de déterminer le taux d'oxygène dans des dispositifs générant de l'énergie thermique, en, tant qu'énergie utilisable, par combustion de combustibles contenant notamment du carbone, des hydrocarbures ou de l'hydrogène.

16. Utilisation d'un matériau pour une résistance, sensible à l'oxygène, selon l'une des revendications 1 à 10 ci-avant pour un capteur de taux d'oxygène permettant de déterminer le taux d'oxygène dans des réacteurs biochimiques.

17. Procédé de réalisation d'un matériau pour une résistance, sensible à l'oxygène, selon l'une ou plusieurs des revendications ci-avant, **caractérisé en ce que** les oxydes, les carbures et/ou oxy-carbures des métaux contenus dans le matériau sensible sont introduits dans des proportions stoechiométriques, sont finement mélangés, broyés dans un solvant organique, séchés et brûlés, **en ce que** la poudre des oxydes des métaux résultante est transformée en une pâte qui est appliquée sur un support électriquement isolant et est brûlée, et **en ce que** les électrodes nécessaires pour mesurer la résistance électrique sont montées avant ou après le brûlage de la pâte d'oxydes métalliques.

Fig. 1

Fig. 2

Fig. 3

Fig. 4